# EUROPÄISCHE PATENTSCHRIFT

(11) **EP 0 577 660 B1**
(45) Veröffentlichungstag und Bekanntmachung des Hinweises auf die Patenterteilung: **01.02.1995**
(21) Anmeldenummer: 92907095.1
(22) Anmeldetag: 16.03.1992
(51) Int. Cl.: B01D 29/21, B01D 35/153, B01D 27/02, B01D 29/54

(54) **FLÜSSIGKEITSFILTER, INSBESONDERE SCHMIERÖLFILTER FÜR VERBRENNUNGSMOTOREN**
FILTER FOR LIQUIDS, IN PARTICULAR INTERNAL-COMBUSTION ENGINE LUBRICANT OILS
FILTRE DE LIQUIDES, NOTAMMENT FILTRE A HUILE POUR MOTEURS A COMBUSTION INTERNE

(30) Priorität: 28.03.1991 DE 4110307; 20.09.1991 DE 4131353; 17.01.1992 DE 4201041
(43) Veröffentlichungstag der Anmeldung: 12.01.1994
(60) Teilanmeldung: 94108514.4
(73) Patentinhaber: KNECHT FILTERWERKE GMBH, D-70376 Stuttgart (DE)
(72) Erfinder: GEBERT, Hans, D-7100 Heilbronn-Böckingen (DE); MÖHLE, Rolf, D-7117 Scheppach (DE); SONNTAG, Dietmar, D-7148 Remseck 2 (DE); BRUSS, Elke, D-7144 Asperg (DE); GUNTERT, Dietwart, D-7123 Sachsenheim (DE); MÜLLER, Hubert, D-7000 Stuttgart 1 (DE)
(74) Vertreter: Pfusch, Volker, Dipl.-Ing.
(86) Internationale Anmeldenummer: DE9200228
(87) Internationale Veröffentlichungsnummer: WO9217262

(56) Entgegenhaltungen:
- DE-A- 1 436 312
- DE-A- 2 443 717
- DE-A- 2 824 346
- DE-A- 3 903 675
- US-A- 2 487 146
- US-A- 3 286 077
- US-A- 4 622 136

## Beschreibung

Die Erfindung betrifft einen Flüssigkeitsfilter, inbesondere Schmierölfilter für einen Verbrennungsmotor nach dem Oberbegriff des Anspruchs 1.

Ein derartiger Flüssigkeitsfilter ist beispielsweise aus der US-PS 33 33 703 bekannt. Der dort gezeigte Flüssigkeitsfilter besteht aus einem topfförmigen Filtergehäuse, das an seinem einen Ende mit einem Montagekopf über ein Schraubgewinde verbunden ist und an seinem anderen offenen Ende mit einem aufschraubbaren Gehäusedeckel versehen ist. Ein im Inneren des Filtergehäuses gelagertes Filterelement ist mit Endscheiben versehen und trennt den Roh- vom Reinraum. An der dem Gehäusedeckel gegenüberliegenden Endscheibe des Filterelementes ist ein Überströmventil angebracht, das in bestimmten Betriebszuständen eine Verbindung zwischen Roh- und Reinraum herstellt. In Verbindung mit der anderen Endscheibe des Filterelementes und dem geschlossenen Ende des Filtergehäuses ist ein Rücklaufsperrventil vorgesehen. Nachteilig bei dieser Ausführung ist einerseits die Entsorgung des aus den unterschiedlichsten Werkstoffen bestehenden Filterelementes und andererseits, daß beim Wechseln des Filterelementes zumindest das Überströmventil weggeworfen wird, da es fest in der Endscheibe des Filterelementes integriert ist.

Aus der US-PS 46 22 136 ist ein Flüssigkeitsfilter bekannt, bei dem in einem trennbaren Filtergehäuse ein Trägerteil gelagert ist, das ein ringförmiges Filterelement aufnimmt. Dieses ringförmige Filterelement, das eine Trennung von Roh- und Reinraum durch dichtes Anliegen an das Trägerteil selbst bewirken muß, muß mit seiner gesamten Länge über das Trägerteil geschoben werden, wodurch eine Beschädigung des Filterelementes und/oder ein Nachlassen der Abdichtwirkung nicht auszuschließen ist.

Aus der DE-OS 39 03 675 ist ein Schmierölfilter mit einem trennbaren Gehäuse bekannt, bei dem der mit stirnseitigen Endscheiben versehene Filtereinsatz über eine Schnappverbindung mit dem auf das Filtergheäuse aufschraubaren Gehäusedeckel fest verbunden ist. Bei dieser Ausführung ist jedoch kein zur Aufnahme von Einzolelementen vorgesehenes, sich zumindest teilweise zentral durch den Innenraum des Filterelementes erstreckendes Trägerteil vorhanden, von dem das Filterelement trennbar und somit allein auswechselbar ist.

Problem der vorliegenden Erfindung ist es daher, einen Flüssigkeitsfilter mit konstruktiv einfachem Aufbau zu finden, bei dem das Filterelement getrennt und umweltfreundlich entsorgt werden kann, wobei die übrigen funktionswichtigen Einzelteile wiederverwendet werden können.

Die Lösung dieses Problems wird erreicht mit einem Flüssigkeitsfilter mit den Merkmalen nach dem Kennzeichen des Anspruchs 1.

Vorteilhafte Ausgestaltungen der Erfindung sind in den Unteransprüchen enthalten.

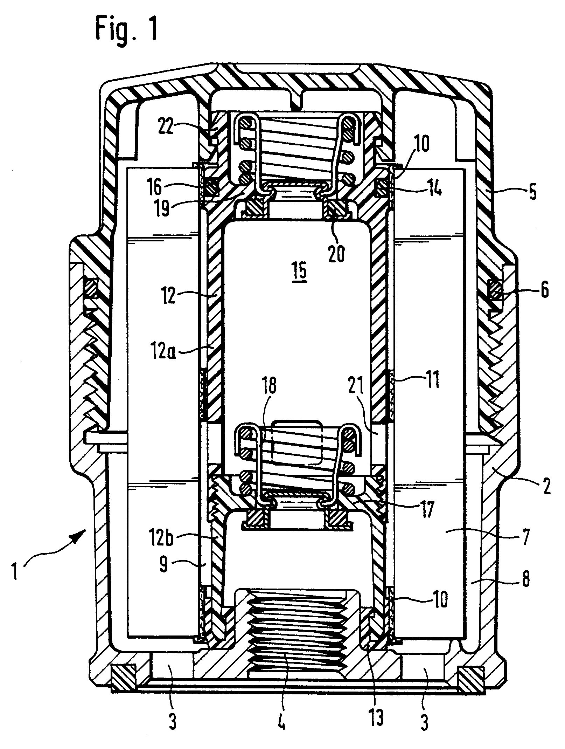

Ausführungsbeispiele nach der Erfindung sind in der Zeichnung dargestellt. Es zeigen:
- Fig. 1: einen erfindungsgemäßen Flüssigkeitsfilter in Schnitt
- Fig. 2: eine zweite Ausführung eines erfindungsgemäßen Flüssigkeitsfilters im Schnitt
- Fig. 3: eine dritte Ausführung eines erfindungsgemäßen Flüssigkeitsfilters im Schnitt
- Fig. 4: eine vierte Ausführung eines erfindungsgemäßen Flüssigkeitsfilters im Schnitt
Ein Flüssigkeitsfilter 1 gemäß Fig. 1 besteht aus einem topfförmigen Filtergehäuse, das, an seinem einen Ende mit Zu- 3 und Ablauföffnungen 4 versehen beispielsweise mit einem Montagekopf verbindbar ist und an seinem anderen Ende durch einen abnehmbaren Gehäusedeckel 5 verschlossen ist. Zwischen dem aufschraubbaren Gehäusedeckel 5 und dem Filtergehäuse 2 ist eine Dichtung 6 vorgesehen. Ein Filterelement 7 aus Papier ist als Sternfilter ausgebildet und taschenverklebt und trennt den Roh- 8 vom Reinraum 9. An seinen Enden ist es jeweils auf seinem Innenumfang mit einer Hülse 10 aus verfestigtem Papier versehen. Zur Versteifung des Filterelementes 7 ist außerdem noch eine Hülse 11 im Mittelbereich des Filterelementes 7 vorgesehen. Durch die Herstellung eines derartigen Filterelementes aus einem einheitlichen Werkstoff ist gewährleistet, daß dieser beim Filterwechsel auf umweltfreundliche Weise entsorgt werden kann.

Das Filterelement 7 wird im Filtergehäuse durch ein hülsenförmiges Trägerteil 12 aus Kunststoff fixiert, wobei die fest mit dem Filterelement 7 verbundenen Hülsen 10 an Dichtungen 13, 14 anliegen. Die Dichtung 13 ist U-förmig ausgebildet und umgreift das untere Ende des Trägerteils 12, so daß gleichzeitig eine Abdichtung zwischen Roh- 8 und Reinraum 9 und dem Inneren 15 des Trägerteils erreicht wird. Die ringförmige Dichtung 14 ist im oberen Bereich des Trägerteils 12 in einer entsprechenden Nut 16 gelagert. Das Trägerteil 12 besteht aus zwei Einzelteilen 12 a, b, die über ein Gewinde miteinander verschraubt sind. In einer Zwischenwand 17 des unteren Einzelteils 12 b des Trägerteils 12 ist ein Rücklaufsperrventil 18 vorgesehen, so daß einerseits erst ab einem vorbestimmten Druck das gereinigte Schmieröl über die Ablauföffnung 4 abfließen kann und andererseits ein Leerlaufen des Filters bei Stillstand des Verbrennungsmotors vermieden wird. In einer Zwischenwand 19 des oberen Einzelteils 12 a des Trägerteils 12 ist ein Überströmventil 20 vorgesehen, das bei einer entsprechenden Druckdifferenz eine Verbindung zwischen dem Inneren 15 des Trägerteils 12 und dem Rohraum 8 herstellt. Das obere Einzelteil 12 a des Trägerteils 12 weist Öffnungen 21 auf, die eine Verbindung zwischen dem Reinraum 9 und dem Inneren 15 des Trägerteils 12 herstellen. Außerdem ist das Einzelteil 12 a mit dem Gehäusedeckel 5 über eine Schnappverbindung 22 in Eingriff zu bringen, so daß beim Abschrauben des Gehäusedeckels 5 vom Filtergehäuse 2 das Filterelement 7 zusammen mit dem Trägerteil 12 entnommen wird.

Mit einem derartigen Flüssigkeitsfilter ist auf konstruktiv einfache Weise gewährleistet, daß beim Wechseln des Filterelementes dessen Entsorgung aufgrund einheitlichen Werkstoffes umweltfreundlich erfolgen kann, und daß die funktionsnotwendigen Einzelteile wie Trägerteil 12, Ventile 18, 20 und Dichtungen 13, 14 entweder wiederverwendet oder einfach ausgetauscht werden können.

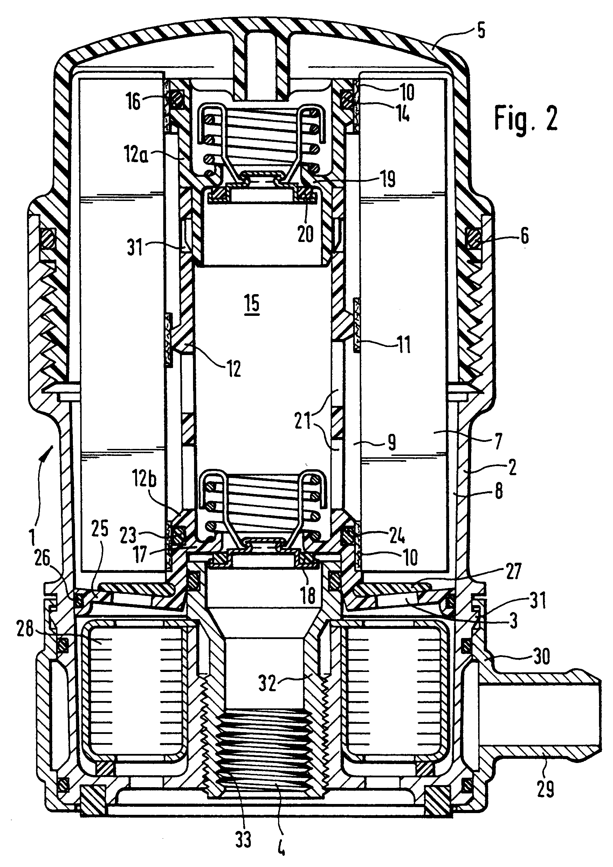

Beim Ausführungsbeispiel eines Flüssigkeitsfilters gemäß Fig. 2 werden für die gleichen Teile die gleichen Bezugszeichen wie in Fig. 1 beibehalten. Es sind dies:
- Flüssigkeitsfilter 1:
- Filtergehäuse 2: mit aufschraubbarem
- Gehäusedeckel 5:
- Zulauföffnung 3:
- Ablauföffnung 4:
- Dichtung 6:
- Filterelement 7:
- Rohraum 8:
- Reinraum 9:
- Hülse 10:
- Hülse 11:
- Trägerteil 12: mit den Einzelteilen 12 a, b, die über eine Schnappverbindung 31 miteinander verbunden sind
- Dichtung 14:
- Innere 15: des Trägerteils 12
- Nut 16: für Dichtung 14
- Zwischenwand 17: zur Aufnahme vom Rücklaufsperrventil 18
- Zwischenwand 19: zur Aufnahme vom Überströmventil 10
- Öffnungen 21: zur Verbindung Reinraum 9 mit Innerem 15 des Trägerteils 12
Das untere Einzelteil 12 b des Trägerteils 12, das ebenfalls ein Rücklaufsperrventil 18 aufnimmt, ist gegenüber dem Ausführungsbeispiel gemäß Fig. 1 unterschiedlich gestaltet und weist zur Aufnahme einer Dichtung 23 eine umlaufende Nut 24 auf. Das untere Ende des Einzelteils 12 b geht in eine die Zulauföffnungen 3 aufweisende Scheibe 25 über und liegt über eine Dichtung 26 am Filtergehäuse 2 an. Ein die Zulauföffnungen 3 verschließendes Rücklaufsperrventil 27 ist ebenfalls im Einzelteil 12 b des Trägerteils 12 gelagert.

Dieser Flüsskeitsfilter 1 unterscheidet sich vom Ausführungsbeispiel gemäß Fig. 1 insbesondere dadurch, daß im Filtergehäuse 2 zusätzlich ein Wärmetauscher 28 (nur skizzenhaft gezeichnet) integriert ist, der mit dem Kühlwasser des Verbrennungsmotors beaufschlagt wird, wobei die Zu- und Abführung des Kühlwassers über ein mit Zu- und Ablaufstutzen 29 versehenes hülsenförmiges, am Gehäuseteil 2 drehbar gelagertes (Schnappverschluß 31) Anschlußteil 30 erfolgt. Zur Halterung des Wärmetauschers 28 ist in das Filtergehäuse 2 ein hülsenförmiges Anschlußelement 32 aus Metall eingeschraubt, das an seinem oberen Ende abgedichtet am Einzelteil 12 b des Trägerteils 12 anliegt und an seinem unteren Ende ein Innengewinde 33 aufweist, um den Flüssigkeitsfilter 1 über bekannte Mittel mit dem Verbrennungsmotor zu verbinden.

Die bezüglich Ausführungsbeispiel gemäß Fig. 1 angeführten Eigenschaften und Vorteile treffen auch für das Ausführungsbeispiel gemäß Fig. 2 zu.

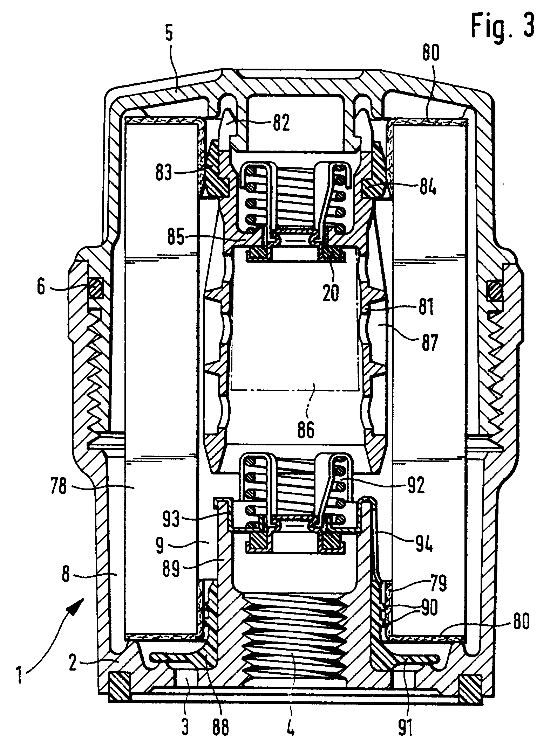

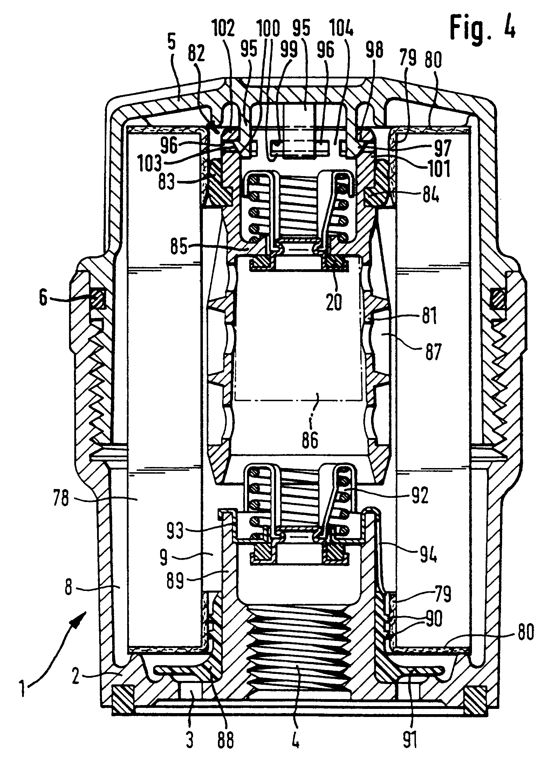

Bei weiteren Ausführungsbeispielen eines Flüssigkeitsfilters gemäß Fig. 3 und 4 werden für gleiche Teile die gleichen Bezugszeichen wie in Fig. 1 bzw. 2 beibehalten.

Ein aus Papier hergestelltes sternförmiges Filterelement 78 ist an seinen Enden jeweils auf seinem Innenumfang mit einer Hülse 79 aus verfestigtem Papier versehen, an die einstückig eine die axialen Stirnkanten des Filterelemtes 78 dichtend verschließende Papier-Endscheibe 80 angeformt ist. Durch die Herstellung eines derartigen Filterelementes aus einem einheitlichen Werkstoff ist gewahrleistet, daß dieser beim Filterwechsel auf umweltfreundliche Weise entsorgt werden kann.

Zur Aufnahme eines Teils der Einzelemente ist ein Trägerteil 81 mittels Schnappverbindung 82 am Gehäusedeckel 5 festgelegt. Eine den Roh- 8 vom Reinraum 9 trennende erste Radialdichtung 83 ist am Trägerteil 81 gelagert, wobei beispielsweise ein Fortsatz 84 in eine Nut des Trägerteils 81 eingreift. In einer Zwischenwand 85 des Trägerteils 81 ist ein Überströmventil 20 vorgesehen, das bei einer entsprechenden Druckdifferenz eine Verbindung zwischen Roh- 8 und Reinraum 9 herstellt. Im Inneren des Trägerteils 81 kann zusätzlich ein Sieb 86 vorgesehen sein. Weiterhin sind zur Abstützung des Filterelementes 78 - auf dem äußeren Umfang des Trägerteils verteilt - axial verlaufende Stützrippen 87 am Trägerteil 81 angeformt.

Zur Aufnahme einer den Roh- 8 vom Reinraum 9 trennenden zweiten Radialdichtung 88 ist am Filtergehäuse 2 mittig ein ins Innere des Flüssigkeitsfilters ragender rohrförmiger Stutzen 89 einstückig angeformt. Die Radialdichtung 88 kann über an ihr angeformte Dichtlippen 90 an der am Filterelement 78 angeordneten Hülse 79 anliegen. Außerdem kann ein die Zulauföffnungen 3 versperrendes Rücklaufsperrventil 91 mit der Radialdichtung 88 einstückig verbunden sein. Das Rücklaufsperrventil 91 kann beispielsweise über ein im Stutzen 89 gelagertes Federblech zusätzlich federnd vorgespannt sein. Um ein Leerlaufen des Reinraumes 9 bei Betriebsstillstand zu vermeiden, ist am Stutzen 89 ein Rücklaufsperrventil 92 befestigt, wobei dessen Ringscheibe 93 mit auf dem Umfang verteilten Zungen 94 versehen ist, die zur Lagesicherung der Radialdichtung 88 dienen.

Der Unterschied zwischen Fig. 3 und Fig. 4 besteht darin, daß in Fig. 4 die Schnappverbindung 82 lösbar ausgebildet ist.

Die lösbare Schnappverbindung zwischen Gehäusedeckel 5 und Trägerteil 81 umfaßt vier am inneren Deckelboden umfangsmäßig gleich verteilte, ins Gehäuseinnere ragende, hakenförmige Laschen 95, die in entsprechende geschlossene Aussparungen 96 des Trägerteils 81 eingreifen, die an dem dem Deckel 5 zugewandten Ende des Trägerteils 81 angebracht sind. Dabei liegt nach Einschnappen der Laschen 95 jeweils ein Nocken 97 jeder Lasche 95 mit seiner scharfen Kante 98 an einer in Sicherungsrichtung scharfkantig ausgebildeten Verkrallseite 99 der Aussparung 96 an, so daß auch bei extremen Druckverhältnissen im Filterinneren ein ungewolltes Lösen des Trägerteils 81 vom Gehäusedeckel 5 unmöglich ist. Die übrigen drei Seiten der Aussparung 96 können, je nach dem welche Lösemöglichkeit (Drehen oder axiales Verschieben) vorgesehen ist, in Löserichtung mit angeschrägten Flächen 100 versehen sein. Die Aussparungen 96 sind am oberen Ende 101 des Trägerteils 81 so eingeformt, daß am Trägerteil 81 noch ein umlaufender Ring 102 vorhanden ist.

Bei der Montage von Deckel 5 und Trägerteil 81 wird das Trägerteil 81 mit seinem Ring 102 über eine Anformschräge 103 der hakenförmigen Laschen 95 so in Richtung Deckelboden geschoben, daß anschließend die Nocken 97 der Laschen 95 in die Aussparungen 96 einrasten.

Bei der Demontage von Deckel 5 und Trägerteil 81 wird das Trägerteil 81 zuerst in Richtung Deckel 5 geschoben, so daß die Nocken 97 der Laschen 95 über die angeschrägten Flächen 103 der Aussparungen 96 geführt innen am Ende 101 des Trägerteils 81 zur Anlage kommen. Dann wird das Trägerteil 81 so weit gedreht, daß beim anschließenden Abziehen des Trägerteils 81 die Laschen 95 über zwischen den Aussparungen 96 liegende Führungsstege 104, die das Ende 101 des Trägerteils 81 mit dem Ring 102 des Trägerteils 81 verbinden, gleiten, ohne in die Aussparungen 96 einzurasten.

Mit den aufgezeigten Ausführungesbeispielen eines derartigen Flüssigkeitsfilters ist durch die Verwendung von einheitlichen Materialien für die einzelnen Filterelemente beim Filterwechsel eine getrennte, umweltfreundliche Entsorgung gewährleistet.

Außerdem ist durch die spezielle konstruktive Ausbildung des die funktionell bedingt notwendigen Einzelteile aufnehmenden Trägerteils sichergestellt, daß Austauschbarkeit und/oder Wiederverwendbarkeit jedes Einzelteiles möglich ist, d. h. beispielsweise kann das Trägerteil komplett ausgetauscht oder wiederverwendet werden, nur die Dichtungen und/oder die Filterelemente können getrennt ersetzt werden oder das wertvolle Filtergehäuse kann für sich wiederverwendet werden, da keine weiteren Einzelteile (Verschleißteile) fest in ihm integriert sind. Die derartige Gestaltung des Flüssigkeitsfilters erlaubt eine baukastenteilmäßige Verwendung, so daß auch beispielsweise das eine oder andere Ventil ohne weitere Vorkehrungen weggelassen werden kann.

## Patentansprüche

1. Flüssigkeitsfilter, insbesondere Schmierölfilter für einen Verbrennungsmotor, bestehend aus einem trennbaren Filtergehäuse und verschiedenen darin untergebrachten Einzelelementen wie mindestens einem ringförmigen, austauschbaren Filterelement, sowie u. a. mehreren Dichtungen und gegebenenfalls verschiedenen Ventilen, die als Überström- und/oder Rücklaufsperrventil ausgebildet sind, wobei zur Aufnahme der Einzelelemente ein von dem mindestens einen Filterelement trennbares, sich zumindest teilweise zentral durch den Innenraum des Filterelementes erstreckendes Trägerteil im Filtergehäuse gelagert ist und der Roh- vom Reinraum mittels an den axialen Enden des Filterelementes angebrachter radialer Innendichtungen getrennt ist,
dadurch gekennzeichnet,
daß das abtrennbare Filterelement (7, 46, 78) sternförmig gefaltet und stirnseitig gedichtet ist und zur Anlage an Dichtungen (13, 14, 23, 83, 88) an seinen beiden Enden innen jeweils mit einer Hülse (10, 47, 79) versehen ist.

2. Flüssigkeitsfilter nach Anspruch 1,
dadurch gekennzeichnet,
daß das Material für die Hülse (10, 47, 79) aus dem Filterelement (7, 46, 78) entsprechendem gleichartigen Material ist.

3. Flüssigkeitsfilter nach Anspruch 1 oder 2,
dadurch gekennzeichnet,
daß das sternförmig gefaltete Filterelement (7, 46) an seinen axialen Stirnseiten taschenverklebt ist.

4. Flüssigkeitsfilter nach einem der vorhergehenden Ansprüche,
dadurch gekennzeichnet,
daß der Werkstoff für das Filterelement (7, 46, 78) Papier ist.

5. Flüssigkeitsfilter nach einem der vorhergehenden Ansprüche,
dadurch gekennzeichnet,
daß die Hülsen (10, 47, 79) jeweils mit die axialen Stirnkanten des gefalteten Filtermaterials dichtenden Endscheiben (80) verbunden sind.

6. Flüssigkeitsfilter nach einem der vorhergehenden Ansprüche,
dadurch gekennzeichnet,
daß zwischen den Hülsen (10, 47) noch mindestens eine weitere Hülse (11) als Stütze für die Falten des Filterelementes (7, 46) mit diesen Falten verbunden ist.

7. Flüssigkeitsfilter nach einem der vorhergehenden Ansprüche,
dadurch gekennzeichnet,
daß das Trägerteil (12, 50, 81) aus Kunststoff besteht.

8. Flüssigkeitsfilter nach einem der vorhergehenden Ansprüche,
dadurch gekennzeichnet,
daß das Trägerteil (12, 50) aus mehreren Einzelstücken (12 a, b, 51, 51 a, 52, 53) zusammengesetzt ist.

9. Flüssigkeitsfilter nach Anspruch 1,
dadurch gekennzeichnet,
daß zur Aufnahme der Einzelelemente einerseits ein von dem mindestens einen Filterelement (78) trennbares Trägerteil (81) und andererseits das Filtergehäuse (2) selbst dient.

10. Flüssigkeitsfilter nach Anspruch 9,
dadurch gekennzeichnet,
daß das Trägerteil (81) eine den Roh-(8) vom Reinraum (9) trennende erste Radialdichtung (83) und ein Überströmventil (20) aufnimmt.

11. Flüssigkeitsfilter nach Anspruch 9 oder 10,
dadurch gekennzeichnet,
daß das Trägerteil (81) ein Sieb (86) aufnimmt.

12. Flüssigkeitsfilter nach einem der Ansprüche 9 - 11,
dadurch gekennzeichnet,
daß am Trägerteil (81) zur Stützung des Filterelementes (78) auf dem Umfang verteilte, axial verlaufende Stützrippen (87) angeformt sind.

13. Flüssigkeitsfilter nach einem der Ansprüche 9 - 11,
dadurch gekennzeichnet,
daß zur Aufnahme einer den Roh-(8) vom Reinraum (9) trennenden zweiten Radialdichtung (88) am Filtergehäuse (2) mittig ein ins Innere des Flüssigkeitsfilters ragender rohrförmiger Stutzen (89) angeformt ist.

14. Flüssigkeitsfilter nach Anspruch 13,
dadurch gekennzeichnet,
daß die Radialdichtung (88) mit umlaufenden Dichtlippen (90) versehen ist.

15. Flüssigkeitsfilter nach Anspruch 13,
dadurch gekennzeichnet,
daß an dem Stutzen (89) außen ein die Zulauföffnungen (3) verschließendes Rücklaufsperrventil (91) anliegt.

16. Flüssigkeitsfilter nach Anspruch 15,
dadurch gekennzeichnet,
daß das Rücklaufsperrventil (91) in die Radialdichtung (88) integriert ist.

17. Flüssigkeitsfilter nach einem der Ansprüche 13 - 15,
dadurch gekennzeichnet,
daß der Stutzen (89) ein Rücklaufsperrventil (92) aufnimmt.

18. Flüssigkeitsfilter nach einem der vorhergehenden Ansprüche,
dadurch gekennzeichnet,
daß das Trägerteil (50, 81) mit dem Gehäusedeckel (5, 42) lösbar verbunden ist.

19. Flüssigkeitsfilter nach Anspruch 18,
dadurch gekennzeichnet,
daß die Verbindung eine lösbare Schnappverbindung (82) ist.

20. Flüssigkeitsfilter nach Anspruch 19 mit folgenden kennzeichnenden Merkmalen der lösbaren Schnappverbindung:
- mindestens zwei flexible, hakenförmige Laschen (95) des Gehäusedeckels (5) oder des Trägerteils (81) greifen in entsprechende, geschlossene Aussparungen (96) des anderen der beiden Teile (5, 81) ein
- jede Aussparung (96) weist in Sicherungsrichtung mindestens eine scharfkantig ausgebildete Verkrallseite (99) auf
- jede Aussparung (96) und/oder jede Lasche (95) weist in Löserichtung mindestens eine angeschrägte Löseseite (100) auf
- umfangsmäßig liegen zwischen den Aussparungen (96) Führungsstege (104) für die Laschen (95).

21. Flüssigkeitsfilter nach Anspruch 20,
dadurch gekennzeichnet,
daß am inneren Deckelboden ins Gehäuseinnere ragende, hakenförmige Laschen (95) in entsprechende, an dem dem Deckel (5) zugewandten Ende (101) des Trägerteils (81) angebrachte geschlossene Aussparungen (96) im Trägerteil (81) eingreifen, wobei jeweils die Nocken (97) der Laschen(95) mit ihrer scharfen Kante (98) in Sicherungsrichtung an der scharfkantig ausgebildeten Verkrallseite (99) jeder Aussparung (96) anliegen.

22. Flüssigkeitsfilter nach Anspruch 20,
dadurch gekennzeichnet,
daß umfangsmäßig verteilt vier Laschen (95) vorgesehen sind.

23. Flüssigkeitsfilter nach einem der vorhergehenden Ansprüche,
dadurch gekennzeichnet,
daß in das Filtergehäuse (2) ein Wärmetauscher (28) integriert ist.

## Claims

1. Liquid filter, in particular lubricating oil filter for an internal combustion engine, consisting of a separable filter housing and different individual elements located therein such as at least one annular, exchangeable filter element, as well as inter alia several gaskets and possibly different valves, which are constructed as overflow and/or non-return valves, for receiving the individual elements a support part being mounted in the filter housing, which support part can be separated from the at least one filter element and extends at least partially centrally through the interior of the filter element and the raw chamber being separated from the clean chamber by means of radial internal gaskets located at the axial ends of the filter element, characterised in that the separable filter element (7, 46, 78) is folded in the shape of a star and is sealed on the end face and for abutment against gaskets (13, 14, 23, 83, 88) is provided internally respectively with a sleeve (10, 47, 79) at its two ends.

2. Liquid filter according to Claim 1, characterised in that the material for the sleeve (10, 47, 79) consists of similar material to that of the filter element (7, 46, 78).

3. Liquid filter according to Claim 1 or 2, characterised in that the filter element (7, 46) folded in the shape of a star is stuck in the shape of pockets at its axial end faces.

4. Liquid filter according to one of the preceding Claims, characterised in that the material for the filter element (7, 46, 78) is paper.

5. Liquid filter according to one of the preceding Claims, characterised in that the sleeves (10, 47, 79) are connected respectively to end discs (80) sealing the axial front edges of the folded filter material.

6. Liquid filter according to one of the preceding Claims, characterised in that between the sleeves (10, 47), at least one further sleeve (11) as a support for the folds of the filter element (7, 46) is connected to these folds.

7. Liquid filter according to one of the preceding Claims, characterised in that the support part (12, 50, 81) consists of synthetic material.

8. Liquid filter according to one of the preceding Claims, characterised in that the support part (12, 50) is composed of several individual members (12a, b, 51, 51a, 52, 53).

9. Liquid filter according to Claim 1, characterised in that a support part (81) able to be separated from the at least one filter element (78), on the one hand and the filter housing (2) itself on the other hand serves for receiving the individual elements.

10. Liquid filter according to Claim 9, characterised in that the support part (81) receives a first radial gasket (83) separating the raw chamber (8) from the clean chamber (9) and an overflow valve (20).

11. Liquid filter according to Claim 9 or 10, characterised in that the support part (81) receives a sieve (86).

12. Liquid filter according to one of Claims 9 to 11, characterised in that integrally formed on the support part (81) for supporting the filter element (78) and distributed on the periphery are axially extending support ribs (87).

13. Liquid filter according to one of Claims 9 to 11, characterised in that for receiving a second radial gasket (88) separating the raw chamber (8) from the clean chamber (9), a tubular socket (89) projecting into the inside of the liquid filter is integrally formed centrally on the filter housing (2).

14. Liquid filter according to Claim 13, characterised in that the radial gasket (88) is provided with peripheral sealing lips (90).

15. Liquid filter according to Claim 13, characterised in that a non-return valve (91) closing off the inlet openings (3) bears externally against the socket (89).

16. Liquid filter according to Claim 15, characterised in that the non-return valve (91) is integrated in the radial basket (88).

17. Liquid filter according to one of Claims 13 to 15, characterised in that the socket (89) receives a non-return valve (92).

18. Liquid filter according to one of the preceding Claims, characterised in that the support part (50, 81) is detachably connected to the housing cover (5, 42).

19. Liquid filter according to Claim 18, characterised in that the connection is a releasable snap-action connection (82).

20. Liquid filter according to Claim 19 with the following characterising features of the releasable snap-action connection:
- at least two flexible, hook-shaped flaps (95) of the housing cover (5) or of the support part (81) engage in corresponding, closed recesses (96) of the other of the two parts (5, 81)
- in the locking direction, each recess (96) comprises at least one clawed side (99) constructed with a sharp edge
- each recess (96) and/or each flap (95) comprises at least one bevelled release side (100) in the release direction
- guide webs (104) for the flaps (95) lie peripherally between the recesses (96).

21. Liquid filter according to Claim 20, characterised in that hook-shaped flaps (95) projecting into the inside of the housing on the inner cover base project into corresponding closed recesses (96) in the support part (81), which recesses are located on the end (101) of the support part (81) facing the cover (5), the cams (97) of the flaps (95) bearing respectively by their sharp, edge (98) in the locking direction against the clawed side (99), having a sharp-edged construction, of each recess (96).

22. Liquid filter according to Claim 20, characterised in that four flaps (95) are distributed over the periphery.

23. Liquid filter according to one of the preceding Claims, characterised in that a heat exchanger (28) is integrated in the filter housing (2).

## Revendications

1. Filtre à liquides, en particulier filtre à huile lubrifiante pour moteur à combustion interne, constitué d'un corps séparable et de différents éléments montés dans celui-ci tels qu'au moins un élément filtrant annulaire remplaçable, et entre autres plusieurs joints d'étanchéité et éventuellement différents clapets de décharge et/ou de non-retour, pour le montage des différents éléments étant monté dans le corps un élément support séparable de l'élément ou des éléments filtrant(s) et s'étendant au centre sur au moins une partie de l'intérieur de l'élément filtrant, et l'espace brut étant séparé de l'espace pur au moyen de joints intérieurs radiaux montés aux extrémités axiales de l'élément filtrant, caractérisé par le fait que l'élément filtrant séparable (7, 46, 78) est plié en étoile et bouché frontalement et, pour s'appuyer sur des joints d'étanchéité (13, 14, 23, 83, 88) est pourvu intérieurement à chaque extrémité d'un manchon (10, 47, 79).

2. Filtre à liquides selon la revendication 1, caractérisé par le fait que la matière du manchon (10, 47, 79) est semblable à celle de l'élément filtrant (7, 46, 78).

3. Filtre à liquides selon l'une des revendications 1 et 2, caractérisé par le fait que l'élément filtrant plié en étoile (7, 46) est collé en poche sur ses côtés frontaux axiaux.

4. Filtre à liquides selon l'une des revendications précédentes, caractérisé par le fait que l'élément filtrant (7, 46, 78) est en papier.

5. Filtre à liquides selon l'une des revendications précédentes, caractérisé par le fait que les manchons (10, 47, 79) sont joints chacun à un flasque d'extrémité (80) bouchant le bord frontal axial de la matière filtrante pliée.

6. Filtre à liquides selon l'une des revendications précédentes, caractérisé par le fait qu'entre les manchons (10, 47), au moins un autre manchon (11) servant d'appui pour les plis de l'élément filtrant (7, 46) est joint à ces plis.

7. Filtre à liquides selon l'une des revendications précédentes, caractérisé par le fait que l'élément support (12, 50, 81) est en plastique.

8. Filtre à liquides selon l'une des revendications précédentes, caractérisé par le fait que l'élément support (12, 50) est composé de plusieurs pièces (12a, 12b, 51, 51a, 52, 53).

9. Filtre à liquides selon la revendication 1, caractérisé par le fait que les différents éléments sont supportés d'une part par un élément support (81) séparable de l'élément ou des éléments filtrant(s) (78) et d'autre part par le corps (2) lui-même du filtre.

10. Filtre à liquides selon la revendication 9, caractérisé par le fait que l'élément support (81) porte un premier joint radial (83) séparant l'espace brut (8) de l'espace pur (9) et un clapet de décharge (20).

11. Filtre à liquides selon l'une des revendications 9 et 10, caractérisé par le fait que l'élément support (81) porte un tamis (86).

12. Filtre à liquides selon l'une des revendications 9 à 11, caractérisé par le fait que sur l'élément support (81) sont faites, pour l'appui de l'élément filtrant (78), des nervures d'appui (87) s'étendant axialement réparties sur la circonférence.

13. Filtre à liquides selon l'une des revendications 9 à 11, caractérisé par le fait que pour le montage d'un deuxième joint radial (88) séparant l'espace brut (8) de l'espace pur (9) est faite au milieu sur le corps (2) une tubulure (89) saillant à l'intérieur du filtre.

14. Filtre à liquides selon la revendication 13, caractérisé par le fait que le joint radial (88) est pourvu de lèvres circonférentielles d'étanchéité (90).

15. Filtre à liquides selon la revendicatioin 13, caractérisé par le fait que sur la tubulure (89) s'appuie extérieurement un clapet de non-retour (91) qui obture les orifices d'arrivée (3).

16. Filtre à liquides selon la revendication 15, caractérisé par le fait que le clapet de non-retour (91) est intégré au joint radial (88).

17. Filtre à liquides selon l'une des revendications 13 à 15, caractérisé par le fait que sur la tubulure (89) est monté un clapet de non-retour (92).

18. Filtre à liquides selon l'une des revendications précédentes, caractérisé par le fait que l'élément support (50, 81) est joint de manière démontable au couvercle (5, 42).

19. Filtre à liquides selon la revendication 18, caractérisé par le fait que la jonction est un encliquetage démontable (82).

20. Filtre à liquides selon la revendication 19 avec les caractéristiques caractérisantes suivantes de l'encliquetage démontable :
- au moins deux pattes souples en forme de crochet (95) du couvercle (5) ou de l'élément support (81) s'engagent dans des évidements fermés correspondants (96) de l'autre de ces deux éléments (5, 81),
- chaque évidement (96) présente dans la direction d'arrêt au moins une face de cramponnement à arête vive (99),
- chaque évidement (96) et/ou chaque patte (95) présente dans la direction de démontage au moins une face chanfreinée de démontage (100),
- entre les évidements (96) se trouvent, circonférentiellement, des ponts de guidage (104) pour les pattes (95).

21. Filtre à liquides selon la revendication 20, caractérisé par le fait que sur le fond intérieur du couvercle, des pattes en forme de crochet (95) saillant à l'intérieur du corps s'engagent dans des évidements fermés correspondants (96) faits à l'extrémité (101) de l'élément support (81) dirigée vers le couvercle (5), l'ergot (97) de chaque patte (95) s'appuyant par son arête vive (98) dans la direction d'arrêt sur la face de cramponnement à arête vive (99) de l'évidement (96) correspondant.

22. Filtre à liquides selon la revendication 20, caractérisé par le fait qu'il est prévu quatre pattes (95) réparties sur la circonférence.

23. Filtre à liquides selon l'une des revendications précédentes, caractérisé par le fait qu'un échangeur de chaleur (28) est intégré au corps (2) du filtre.
